(19) Europäisches Patentamt
European Patent Office
Office européen des brevets

(11) **EP 2 369 177 B1**

## (12) EUROPÄISCHE PATENTSCHRIFT

(45) Veröffentlichungstag und Bekanntmachung des Hinweises auf die Patenterteilung:
**27.01.2016 Patentblatt 2016/04**

(21) Anmeldenummer: **11156800.2**

(22) Anmeldetag: **03.03.2011**

(51) Int Cl.:
***F03D 7/02*** *(2006.01)*

(54) **Verfahren zur Bremszustandsermittlung und Windenergieanlage zum Durchführen des Verfahrens**

Method for detection of a brake condition in a wind turbine and wind turbine therefor

Procédé de détection de la condition d'un frein dans une éolienne et éolienne

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **25.03.2010 DE 102010012957**

(43) Veröffentlichungstag der Anmeldung:
**28.09.2011 Patentblatt 2011/39**

(73) Patentinhaber: **Senvion GmbH
22297 Hamburg (DE)**

(72) Erfinder:
• **Altemark, Jens
24768, Rendsburg (DE)**
• **Brückner, Matthias
24768, Rendsburg (DE)**

(74) Vertreter: **Glawe, Delfs, Moll
Partnerschaft mbB von
Patent- und Rechtsanwälten
Rothenbaumchaussee 58
20148 Hamburg (DE)**

(56) Entgegenhaltungen:
**WO-A2-2009/129085        DE-A1-102004 051 054
US-A1- 2009 223 307**

**Beschreibung**

Die Erfindung betrifft ein Verfahren zum Ermitteln des Zustands einer Bremsvorrichtung einer Windenergieanlage sowie eine Windenergieanlage zum Durchführen des Verfahrens.

Moderne Windenergieanlagen weisen in der Regel Bremsvorrichtungen, z. B. zum Abbremsen des Rotors bei Betriebsstörungen oder zu Wartungszwecken, oder zur Fixierung des Maschinenhaüses der Windenergieanlage auf dem Turm auf. Im erstgenannten Fall handelt es sich hierbei zumeist um mechanische Scheibenbremsen, die direkt auf die Rotordrehachse oder indirekt über ein Getriebe auf den Rotor wirken. Derartige mechanische Bremsen müssen überwacht werden, um eine Fehlfunktion rechtzeitig zu erkennen und ein Sicherheitsrisiko auszuschließen. Hierzu sind unterschiedliche Verfahren bekannt. Die DE 10 2004 051 054 A1 der Anmelderin offenbart eine Anlage, bei der eine Bremsvorrichtung zur Abbremsung einer mit einem Stellantrieb verbundenen Komponente mit einem Sensor überwacht wird, der eine Fehlfunktion der Bremse detektiert. Nachteilig ist hier, dass zwar eine Fehlfunktion der Bremse erkannt wird, aber bei einer ordnungsgemäß funktionierenden Bremse kein Bremsenzustandskennwert bestimmt wird.

Der Erfindung liegt die Aufgabe zu Grunde, ein Verfahren und eine Windenergieanlage vorzustellen, bei denen der Zustand der Bremse mit geringem Aufwand ermittelt werden kann. Die Aufgabe wird gelöst durch die Merkmale der unabhängigen Ansprüche. Vorteilhafte Ausführungsformen finden sich in den Unteransprüchen.

Bei dem erfindungsgemäßen Verfahren werden Daten über das Belastungsverhalten von Bremsvorrichtungen des betreffenden Typs bereitgestellt. Im Zeitraum zwischen dem Beginn eines Bremsvorgangs und dem Ende eines Bremsvorgangs wird ein Messwert aufgenommen. Die Daten und der Messwert werden zu einem Bremsenzustandskennwert zusammengeführt.

Zunächst werden einige Begriffe erläutert. Als Beginn eines Bremsvorgangs gilt der Zeitpunkt, zu dem die Bremsbeläge mit dem Bremskörper in Kontakt gebracht werden. Der Bremskörper ist in der Regel eine Bremsscheibe. Der Bremsvorgang ist entweder dann beendet, wenn die Bremsbeläge wieder von der Bremsscheibe gelöst werden oder wenn die Rotation bis auf null bzw. nahezu null abgebremst ist.

Der Erfindung liegt die Erkenntnis zu Grunde, dass Größen, die unmittelbaren Aufschluss über den Zustand der Bremsvorrichtung geben, meist nur mit einigem Aufwand direkt zu messen sind. Es müssen eigene Sensoren vorgesehen sein, die teils unter widrigen Bedingungen arbeiten und deswegen Wartungsaufwand verursachen. Dies gilt etwa für direkte Messungen des Bremsbelagverschleißes und für direkte Messungen der Temperatur. Stattdessen schlägt die Erfindung vor, auf Messwerte zurückzugreifen, die leicht zu messen sind oder ohnehin vorhanden sind. Diese leicht erhältlichen Messwerte werden zusammengeführt mit Daten, aus denen sich ergibt, welches Belastungsverhalten die Bremsvorrichtung zeigt, wie also eine Bremsvorrichtung des betreffenden Typs auf bestimmte Bremsvorgänge reagiert. Der Aufwand, die betreffenden Daten zu beschaffen, muss nur einmal investiert werden. Anschließend können die Daten für alle Bremsvorrichtungen dieses Typs verwendet werden. Die Informationen werden in dem Bremsenzustandskennwert zusammengefasst und können z.B. der Steuerung der Windenergieanlage zur Verfügung gestellt werden. Der Bremsenzustandskennwert kann beispielsweise derart sein, dass er einen Schluss auf die Temperatur oder den Verschleiß der Bremsvorrichtung zulässt. In einer vorteilhaften Ausführungsform ist vorgesehen, dass der Bremsenzustandskennwert ein Maß für die Energieaufnahme der Bremsvorrichtung beinhaltet.

Bremsvorgänge bei Windenergieanlagen unterscheiden sich von klassischen Bremsvorgängen, etwa bei Fahrzeugen, dadurch, dass dem System während des Bremsvorgangs weitere Energie zugeführt wird. Der Wind wirkt nämlich auch während des Bremsvorgangs auf den Rotor und es ist unbekannt, welche Menge an Energie das System auf diesem Wege aufnehmen muss. Anders als bei klassischen Bremsvörgängen ist es deswegen bei Windenergieanlagen nicht möglich, die in dem Bremsvorgang umgesetzte Energie einfach als Differenz aus der Energie des Systems am Anfang und der Energie des Systems am Ende zu ermitteln. Erfindungsgemäß wird der Messwerte also so aufgenommen, dass die der Windenergieanlage während des Bremsvorgangs zugeführte Energie berücksichtigt wird.

In einer vorteilhaften Ausführungsform umfasst der Messwert ein Maß für den Bremsweg. Der Bremsweg bezeichnet die Strecke, die die Bremsbeläge zwischen dem Anfang und dem Ende des Bremsvorgangs auf der Bremsscheibe zurückgelegt haben. Es hat sich gezeigt, dass das erfindungsgemäße Verfahren bereits mit der einfachen Annahme gute Ergebnisse liefert, dass der Verschleiß bzw. die aufgenommene Energie proportional zum Bremsweg ist. Die für die Ermittlung des Bremsenzustandskennwerts erforderlichen Daten lassen sich dann leicht ermitteln. Genauere Ergebnisse kann man mit dem erfindungsgemäßen Verfahren erzielen, wenn weitere Messwerte berücksichtigt werden, wie beispielsweise die Drehzahl, die Zeitdauer des Bremsvorgangs, und/oder die Differenz zwischen der Drehzahl am Anfang und am Ende des Bremsvorgangs. Die Berücksichtigung mehrerer Parameter in dem Messwert ist insbesondere dann vorteilhaft, wenn auch die Daten über das Belastungsverhalten der Windenergieanlage entsprechend detailliert vorliegen.

Am einfachsten lässt sich der Bremsweg bestimmen, indem die Anzahl der Umdrehungen zwischen dem Beginn und dem Ende des Bremsvorgangs gezählt wird. Möglich ist es auch, aus anderen Messwerten, wie beispielsweise der Drehzahl zu Beginn und zum Ende des Bremsvorgangs oder der Zeitdauer des Bremsvorgangs auf den Bremsweg zu schließen. Als Messung während des Bremsvorgangs gilt es auch, wenn vor dem Beginn oder nach dem Ende des Bremsvorgangs ein Messwert aufgenommen wird, aus dem direkt auf einen zugehörigen Wert während des Bremsvorgangs geschlossen werden kann. So ist beispielsweise aufgrund der Trägheit die Rotordrehzahl kurz vor dem Beginn eines Bremsvorgangs im Wesentlichen identisch mit der Rotordrehzahl kurz nach dem Beginn des Bremsvorgangs.

Alternativ kann das erfindungsgemäße Verfahren auch ohne explizite Ermittlung des Bremswegs durchgeführt werden. Erforderlich sind dann Daten, die einen direkten Zusammenhang zwischen den betreffenden Messwerten (z.B. Zeit, Drehzahl, Drehzahldifferenz) und dem gewünschten Bremsenzustandskennwert herstellen. Von der Erfindung umfasst ist es, Messwerte nur zu Beginn und zum Ende des Bremsvorgangs aufzunehmen. Alternativ kann während des Bremsvorgangs eine Vielzahl von Messwerten aufgenommen werden. Insbesondere ist hierbei vorteilhaft an eine kontinuierliche oder quasikontinuierliche Aufzeichnung der Messgröße gedacht, um mit möglichst hoher Abtastrate alle verfügbaren Informationen zur genauen Bestimmung des Bremsenzustandskennwerts zu erfassen.

In einer vorteilhaften Ausführungsform ist vorgesehen, dass der Bremsenzustandskennwert in dem Fall, dass der Triebstrang bei dem Bremsvorgang nicht zum Stillstand kommt, unter Berücksichtigung der Drehzahl des Triebstrangs zum Ende des Bremsvorgangs bestimmt wird. Kommt der Triebstrang gewollt oder ungewollt beim Bremsvorgang nicht bis zum Stillstand, lassen sich aus der Drehzahl bei Deaktivierung der Bremseinrichtung wichtige Informationen über den Zustand der Bremseinrichtung ableiten.

Vorzugsweise werden die Messwerte mit Sensoren aufgenommen, die unabhängig von der Überwachung der Bremse ohnehin in der Windenergieanlage vorhanden sind. Dies sind beispielsweise Sensoren für die Drehzahl oder die Zeit, die in der Steuerung benötigt werden, um die Windenergieanlage auf den richtigen Betriebspunkt einzustellen. Aus den Messwerten der Drehzahl und der Zeit kann der Bremsweg berechnet werden. Teure Sensoren, die nur für die Überwachung der Bremse zuständig sind, sind bei dieser Ausführungsform nicht erforderlich.

In dem Bremsenzustandskennwert soll in der Regel der Bremsvorgang in seiner Gesamtheit Niederschlag finden. Der Bremsenzustandskennwert wird deswegen häufig erst nach dem Ende des Bremsvorgangs ermittelt. Durch die Zurverfügungstellung des Messwertes nach dem Ende des Bremsvorgangs wird gewährleistet, dass ein wirklich repräsentativer Kennwert des Bremsenzustands für die weitere Steuerung der Windenergieanlage genutzt wird. Ist der Bremsvorgang noch nicht abgeschlossen, könnte die Weiterverarbeitung des Bremsenkennwerts zu falschen Ergebnissen führen, da sich der Bremsenzustandskennwert sehr kurzfristig weiter verändern könnte.

Ein besonders vorteilhaftes erfindungsgemäßes Verfahren sieht vor, dass aus dem Bremsenzustandskennwert eine zur Abkühlung der Bremse erforderliche Bremsenkühlzeit bestimmt wird. Durch einen Bremsvorgang wird die Bremseinrichtung, z.B. die Bremsscheibe, stark erwärmt. Aus Sicherheitsgründen ist es häufig erforderlich, dass die Windenergieanlage erst wieder in Betrieb genommen werden kann, wenn die Bremseinrichtung ausreichend ausgekühlt ist. Im Stand der Technik ist die Bremsenkühlzeit ein voreingestellter Parameter, der so gewählt sein muss, dass unter den ungünstigsten Bedingungen die Bremse gerade ausreichend auskühlt. Da während der Wartezeit kein Strom produziert werden kann, sind wartezeitbedingte Ertragsausfälle natürlich unerwünscht. Durch die Erfindung ist es nun möglich, nach jedem Bremsvorgang die Bremsenkühlzeit individuell so zu bestimmen, dass schnellstmöglichst die Energieerzeugung wieder aufgenommen werden kann.

Ein besonders vorteilhaftes erfindungsgemäßes Verfahren sieht vor, dass aus dem Bremsenzustandskennwert ein den Bremsenverschleiß kennzeichnender Verschleißkennwert bestimmt wird. Somit ist es möglich, dass der Verschleiß der Bremseinrichtung und dessen Fortschritt ohne einen störanfälligen Sensor in den Bremsbelägen bestimmt wird. Hierdurch entfällt der kostspielige Sensor sowie die aufwendige Instandhaltung und zusätzlich wird die Anlagensicherheit verbessert, weil die Verschleißermittlung durch die deutlich zuverlässigere Sensoren eine höhere Sicherheit bietet.

Vorzugsweise wird auf der Basis derselben Messwerte (z.B. Bremsweg) und unter Verwendung der Daten über das Belastungsverhalten eine Information sowohl über die Temperatur als auch über den Verschleiß der Bremsvorrichtung ermittelt. Von der Erfindung umfasst ist es auch, nur eine der Informationen auf diese Weise zu gewinnen und für die andere Information eine unmittelbare Ermittlung durch einen eigenen Sensor vorzusehen. Es kann also die Temperatur aus einem Messwert wie beispielsweise dem Bremsweg ermittelt werden, während der Verschleiß mittels eines eigenen Sensors direkt gemessen wird. Alternativ kann der Verschleiß aus einem Messwert wie beispielsweise dem Bremsweg ermittelt werden, während die Temperatur mittels eines eigenen Sensors direkt gemessen wird.

Insbesondere wenn aus dem Bremsenzustandskennwert auch der Verschleiß ermittelt werden soll, kann es vorteilhaft sein, dem Bremsenzustandskennwert nicht anhand möglichst einfacher Annahmen, sondern mit erhöhter Genauigkeit zu ermitteln. Dazu kann es vorgesehen sein, den Bremsvorgang bei der Ermittlung des Bremsenzustandskennwerts in eine Vielzahl kurzer Abschnitte zu unterteilen und den Einfluss auf den Bremsenzustandskennwert für jeden Abschnitt einzeln zu ermitteln. Beispielsweise kann für jeden Abschnitt die momentane Drehzahl berücksichtigt werden. Vorzugsweise werden während des Bremsvorgangs entsprechend viele Messwerte aufgenommen. Es kann damit besser berücksichtigt werden, dass das Abbremsen eines Rotors regelmäßig ein nicht-linearer Vorgang ist. Auf diese Weise wird vermieden, dass sich Fehler durch ungenaue Erfassung des Bremsvorgangs über eine Vielzahl von Bremsvorgängen zu einem großen Fehler im Bremsenzustandskennwert aufaddieren.

Besonders vorteilhaft ist hierbei die Erfassung einer Messgröße, welche einen während des Bremsvorgangs dynamisch veränderlichen Betriebsparameter der Windenergieanlage repräsentiert, und der Bremsenzustandskennwert aus der Veränderung der Messgröße während des Bremsvorgangs bestimmt wird. Dynamisch bezeichnet hier insbesondere Parameter der Windenergieanlage, die sich nicht linear mit der Zeit verändern, sondern komplexeren Zusammenhängen, welche z.B. durch die gesamte Anlagendynamik vorgegeben werden, folgen. Die Auswertung dynamischer Messgrößen erfordert zwar einen größeren Berechnungsaufwand, erlaubt dadurch aber auch eine detailliertere Ermittlung des Bremsenzustands.

Bei Bremsvorrichtungen in Windenergieanlagen ist die Kraft, mit der die Bremsbeläge auf der Bremsscheibe aufliegen, in der Regel konstant oder zumindest fest gestuft. Deshalb lassen sich aus dem Bremsweg des Triebstrangs eine Vielzahl von Rückschlüssen, z.B. über die durch die Bremse aufgenommene Bremsenergie und über den Verschleiß relativ einfach aus dem Bremsweg bestimmen. Wenn die Kraft variabel ist, ist die Bestimmung der Daten, die zur Ermittlung des Bremsenzustandskennwerts herangezogen werden, entsprechend aufwändiger.

Regelmäßig wird das Verfahren angewendet bei einer Bremsvorrichtung zum Bremsen eines mit dem Rotor der Windenergieanlage verbundenen Triebsstrangs. Die Bremsvorrichtung kann direkt auf die Welle des Rotors wirken. Ist in dem Triebstrang ein Getriebe vorgesehen, kann die Bremsvorrichtung auf der dem Rotor abgewandten Seite des Getriebes angeordnet sein. Gerade die sogenannte Rotorbremse ist für die Sicherheit der Windenergieanlage besonders wichtig, weshalb die Anwendung der Erfindung zur Ermittlung des Bremsenzustandskennwerts besonders sinnvoll ist. Die Erfindung kann auch bei anderen Bremsvorrichtungen zur Anwendung kommen, die beispielsweise zur Fixierung des Maschinenbaues der Windenergieanlage relativ zum Turm dienen.

Die Erfindung betrifft außerdem eine der Windenergieanlage zum Durchführen des Verfahrens. Die Windenergieanlage umfasst eine Bremsvorrichtung, einen Sensor und eine Steuerungseinheit. Die Steuerungseinheit ist dazu ausgelegt, den Sensor anzuweisen, im Zeitraum zwischen dem Beginn eines Bremsvorgangs und dem Ende eines Bremsvorgangs einen Messwert aufzunehmen. Außerdem ist ein Datenspeicher vorgesehen, in dem Daten über das Belastungsverhalten von Bremsvorrichtungen des betreffenden Typs gespeichert sind. Schließlich umfasst die Windenergieanlage ein Rechenmodul, das aus den Daten und dem Messwert einen Bremsenzustandskennwert ermittelt.

In vorteilhaften Ausführungsformen ist das Rechenmodul dazu ausgelegt, aus dem Bremsenzustandskennwert eine Bremsenkühlzeit und/oder einen Verschleißkennwert zu berechnen. Bei dem mit dem Sensor aufgenommenen Messwert handelt es sich vorzugsweise um einen solchen, der auch unabhängig von einer Überwachung der Bremse in der Steuereinheit verarbeitet wird, beispielsweise zur Ermittlung eines geeigneten Betriebspunkts der Windenergieanlage. Der Betriebspunkt bestimmt sich anhand von Parametern wie Anstellwinkel der Rotorblätter, Spannung, Leistung, Anteil von Wirkleistung und Blindleistung. In die Ermittlung dieser Parameter können Messwerte über beispielsweise die Drehzahl oder Drehzahländerungen einfließen. Es ist dann nicht erforderlich, die Windenergieanlage nur zum Zwecke der Überwachung der Bremse mit teuren Sensoren auszustatten.

Die Windenergieanlage kann mit weiteren Merkmalen des erfindungsgemäßen Verfahrens wie oben beschrieben kombiniert werden.

Die Erfindung wird nachfolgend unter Bezugnahme auf die beigefügten Zeichnungen anhand vorteilhafter Ausführungsformen beispielhaft beschrieben. Es zeigen:

Fig. 1:    eine Außenansicht einer erfindungsgemäßen Windenergieanlage;
Fig. 2:    eine schematische Darstellung von Komponenten der Windenergieanlage aus Fig. 1; und
Fig. 3:    ein Ablaufdiagramm einer Ausführungsform des erfindungsgemäßen Verfahrens.

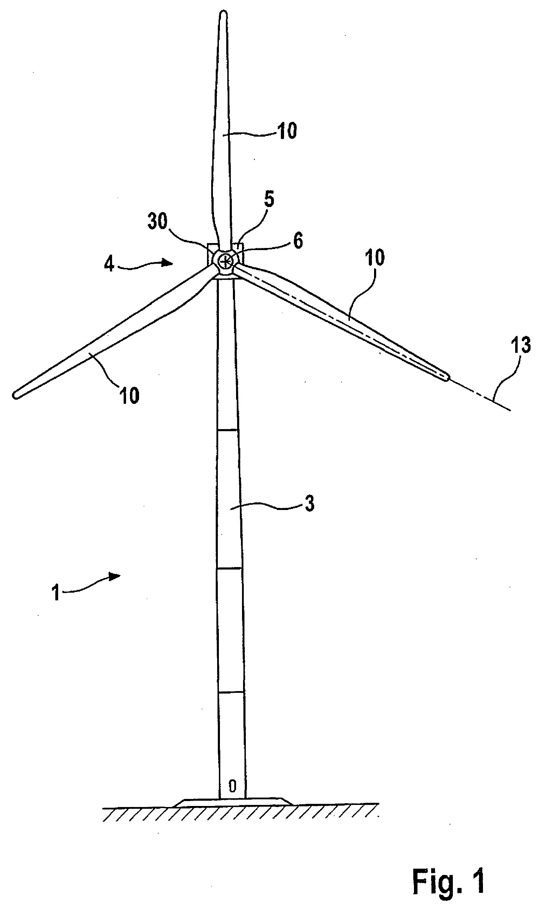

Fig. 1 zeigt eine Windenergieanlage 1 mit einem Turm 3, einem auf dem Turm um eine vertikale Windnachführachse drehbar gelagertem Maschinenhaus, einem um eine im Wesentlichen horizontalen Rotorachse 6 drehbar gelagerten Rotor 4 mit einer Rotornabe 30, an weicher drei Rotorblätter 10 angeordnet sind. Die Rotorblätter sind um eine Blattverstellachse 13, welche in Fig. 1 exemplarisch für ein Rotorblatt 10 eingezeichnet ist und im Wesentlichen mit der Blattlängsachse zusammenfällt, winkelverstellbar an der Rotornabe 30 angeordnet.

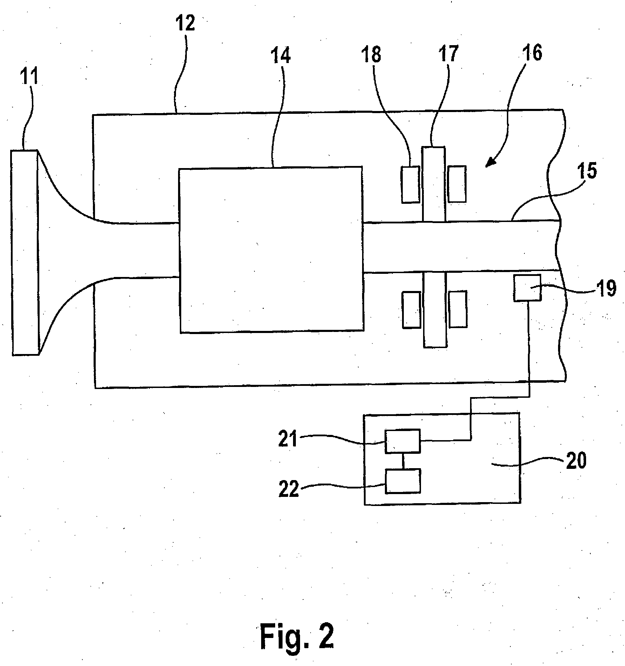

Einige Komponenten der Windenergieanlage aus Fig. 1 sind in Fig. 2 schematisch dargestellt. Eine Rotorwelle 11 erstreckt sich in das Maschinengehäuse 12 und mündet in einem Getriebe 14. In dem Getriebe 14 wird die langsamen Rotation der Rotorblätter 11 auf eine höhere Drehzahl übersetzt und auf eine Generatorwelle 15 übertragen. Die Generatorwelle 15 treibt einen nicht dargestellten Generator an, mit dem elektrischer Strom erzeugt wird.

Auf die Generatorwelle wirkt eine Bremsvorrichtung 16, die eine mit der Generatorwelle 15 verbundene Bremsscheibe 17 sowie Bremszangen mit Bremsbelägen 18 umfasst. Die Bremsvorrichtung 16 dient dazu, den Rotor 4 abzubremsen. Bei einem Bremsvorgang reiben die Bremsbeläge 18 an der Bremsscheibe 17, wobei der Druck, mit dem die Bremsbeläge 18 an der Bremsscheibe 17 anliegen, immer der gleiche ist.

Der Bremsvorgang beginnt, wenn die Bremsbeläge 18 mit der Bremsscheibe 17 in Berührung gebracht werden. In einer Alternative endet der Bremsvorgang, wenn die Generatorwelle 15 zum Stillstand gekommen ist. Dies ist der Fall, wenn der Rotor 4 zunächst durch Verstellen des Anstellwinkels der Rotorblätter 10 aerodynamisch gebremst wird und anschließend mit der Bremsvorrichtung 16 zum vollständigen Stillstand gebracht wird. In einer anderen Alternative endet der Bremsvorgang zu dem Zeitpunkt, zu dem die Bremsbeläge 18 wieder von der Bremsscheibe 17 gelöst werden, während die Generatorwelle 15 sich noch dreht. Ein solcher Bremsvorgang während des laufenden Betriebs findet beispielsweise statt, wenn zum Vermeiden einer Belastungsspitze der Rotor 4 kurzfristig auf eine andere Drehzahl gebracht werden soll.

An der Generatorwelle 15 ist ein Sensor 19 angebracht, der die Umdrehungen der Generatorwelle 15 zählt. Eine Steuereinheit 20 übermittelt dem Sensor 19 den Befehl, zu Beginn eines Bremsvorgangs mit dem Zählen der Umdrehungen zu beginnen. Am Ende des Bremsvorgangs übermittelt der Sensor 19 als Messwert die Information an die Steuereinheit 20, über wie viele Umdrehungen sich der Bremsvorgang erstreckt hat. In einem Rechenmodul 21 wird unter Berücksichtigung des Durchmessers der Bremsscheibe 17 berechnet, welchen Bremsweg die Bremsbeläge 18 während des Bremsvorgangs relativ zu der Bremsscheibe 17 zurückgelegt haben. In einer alternativen Ausführungsform wird der zurückgelegte Bremsweg vereinfacht aus der Bremszeit und der Drehzahldifferenz multipliziert mit einer Proportionalitätskonstante K_w angenommen (Linearisierung des Drehzahlverlaufes).

In einem Datenspeicher 22 sind Informationen über das Belastungsverhalten der Bremsvorrichtung 16 gespeichert. Die Daten umfassen beispielsweise die Informationen, wie stark sich die Bremsvorrichtung 16 unter bestimmten Bedingungen erwärmt oder wie viel Material während bestimmter Bremsvorgänge von den Bremsbelägen 18 und der Bremsscheibe 17 abgetragen wird. Im einfachsten Fall kann ein linearer Zusammenhang zwischen dem Bremsweg und dem Verschleiß bzw. der Temperaturerhöhung angenommen werden. Diese Daten müssen nur ein einziges Mal für Bremsvorrichtungen dieses Typs zusammengestellt werden, anschließend können sie für alle betreffenden Bremsvorrichtungen verwendet werden. Genauere Ergebnisse kann man erhalten, wenn außerdem weitere Parameter des Bremsvorgangs berücksichtigt werden, wie beispielsweise die Dauer des Bremsvorgangs, die Drehzahl oder die Drehzahldifferenz zwischen dem Beginn und dem Ende des Bremsvorgangs.

Vorteilhafte Weiterbildungen der Erfindung zeichnen sich dadurch aus, dass die physikalische Wirklichkeit in den Messwerten und den Daten über das Belastungsverhalten genauer abgebildet ist. Hierzu kann insbesondere der zurückgelegte Bremsweg durch Aufsummierung einer Vielzahl von Drehzahldifferenzen über vorgegebenen Zeitintervallen auch nichtlinear erfasst werden. Für die Verschleißermittlung können vorteilhaft auch komplexere Zusammenhänge wie die Drehzahl- und Temperaturabhängigkeit mit erfasst werden. Die Bremstemperatur kann durch den im Stand der Technik hinreichend bekannten Berechnungsansatz basierend auf der eingebrachten kinetischen Energie ermittelt werden, wozu die Drehzahlen dann quadratisch in den Verschleiß eingehen. Ebenso kann auch die Bremsenkühlzeit basierend auf der eingebrachten (kinetischen) Energie sowie zusätzlich auf der von der Umgebungstemperatur abhängigen Wärmeableitung errechnet werden. Derartige mathematische Modelle sind aus Simulationsverfahren hinreichend bekannt.

Das Rechenmodul 21 bezieht entsprechende Daten aus dem Datenspeicher 22 und berechnet aus dem Bremsweg und den Daten einen Bremsenzustandskennwert. Der Bremsenzustandskennwert kann beispielsweise die Information enthalten, dass sich bei dem letzten Bremsvorgang die Temperatur um einen Wert X erhöht hat und die Bremsscheibe nunmehr eine Temperatur von Y hat. Außerdem kann beispielsweise die Information enthalten sein, dass bei dem letzten Bremsvorgang bestimmte Mengen von Material von der Bremsscheibe 17 bzw. den Bremsbelägen 18 abgetragen worden sind. Um für den Bremsenzustandskennwert ein präziseres Ergebnis zu erhalten, können bei der Berechnung weitere Messwerte berücksichtigt werden, wie beispielsweise Zeitmessungen oder Messwerte von einem nicht dargestellten Drehzahlsensor. Je mehr Messwerte über den Bremsvorgang berücksichtigt werden und desto genauer die dem Datenspeicher 20 hinterlegten Daten auf diese Messwerte abgestimmt sind, desto präzisere Aussagen lassen sich aus dem Bremsenzustandskennwert ableiten.

Im nächsten Schritt kann das Rechenmodul 21 aus dem Bremsenzustandskennwert weitere Informationen ableiten. So kann beispielsweise aus der Temperatur der Bremsvorrichtung 16 am Ende des Bremsvorgangs eine Bremsenkühlzeit berechnet werden. Die Bremsenkühlzeit bezeichnet die Zeitspanne, nach deren Ablauf die Anlage wieder in den Normalbetrieb übergehen kann. Für eine bis zum Stillstand abgebremste Windenergieanlage bedeutet dies, dass sie erst nach Ablauf der Bremsenkühlzeit wieder in Betrieb gesetzt werden kann.

Außerdem kann aus dem Bremsenzustandskennwert ein Verschleißkennwert berechnet werden. Der Verschleißkennwert kann beispielsweise derart sein, dass bei Überschreiten eines vorgegebenen Grenzwertes die Anlage stillgesetzt wird, wobei natürlich eine Wartungsmeldung an eine Fernüberwachungszentrale ausgesendet wird, damit möglichst schnell ein Wartungseinsatz erfolgt. Ist lediglich eine Alarmschwelle überschritten, wird die Fernüberwachungszentrale durch eine Warnmeldung informiert.

Im Rahmen der Erfindung sieht eine vorteilhafte Ausführungsform vor, für verschiedene Bauteile der Bremse verschiedene Verschleißkennwerte zu ermitteln, die beim Austausch des jeweilien Bauteils zu unterschiedlichen Zeiten zurückgesetzt werden. Beispielsweise hat ein Bremsbelag eine deutlich geringere Standzeit als eine Bremsscheibe. Nach einem Austausch der Verschleißteile der Bremse, insbesondere der Bremsbeläge, ist der Verschleißkennwert wieder auf Null zurückzusetzen.

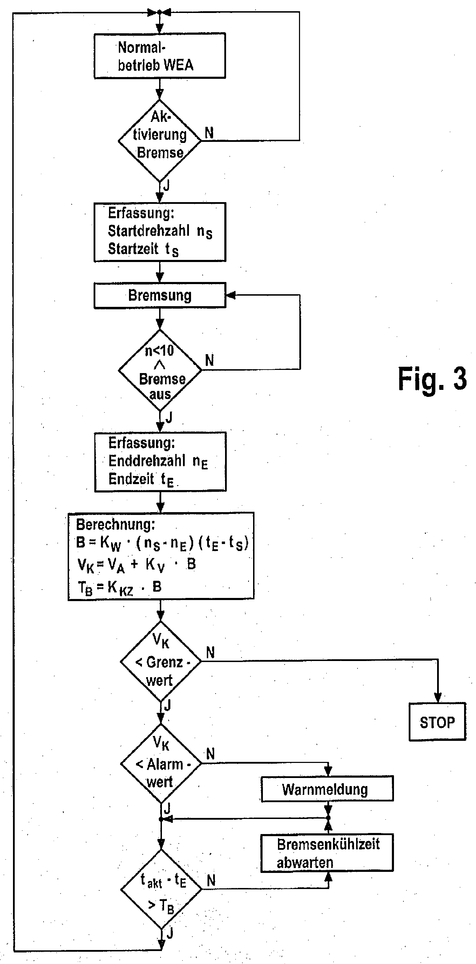

Den Ablauf des erfindungsgemäßen Verfahren in einer einfachen Ausführungsform zeigt das Ablaufdiagramm der Fig. 3. Während des Normalbetriebs der Windenergieanlage 1 wird laufend überprüft, ob die Bremsvorrichtung 16 aktiviert wurde. Ist dies der Fall, sendet die Steuereinheit 2 ein Signal an betreffende Sensoren, die Startdrehzahl $n_S$ und die Startzeit $t_S$ als Messwerte zu erfassen. Während des Bremsvorgangs wird laufend überprüft, ob die Bremsung beendet ist, d.h., ob die Bremse ausgeschaltet (gelöst) wurde oder die Drehzahl kleiner als ein vorgebbarer Grenzwert, z.B. 10 Umdrehungen generatorseitig (bei einem schnelllaufenden Generator mit einer Synchrondrehzahl von 1500 Umdrehungen), ist.

Beim Ende des Bremsvorgangs werden die Enddrehzahl $n_E$ und die Endzeit $t_E$ ermittelt.

Nach dem Ende des Bremsvorgangs wird der Bremsweg als Produkt aus der Drehzahldifferenz ($n_S$ - $n_E$), der Dauer des Bremsvorgangs ($t_S$ - $t_E$) und einer Proportionalitätskonstante $K_W$ berechnet. Der durch den Bremsvorgang verursachte Verschleiß wird als Produkt aus einer Proportionalitätskonstante $K_V$ und dem Bremsweg B errechnet. Um aus diesem Bremsenzustandskennwert einen Verschleißkennwert $V_K$ zu ermitteln, wird eine Addition mit einem vor dem Bremsvorgang gültigen Verschleißwert $V_A$ durchgeführt. Die Bremsenkühlzeit $T_B$ wird als Produkt aus dem Bremsweg B und einer Proportionalitätskonstante $K_{KZ}$ ermittelt. Der eigentliche Bremsenzustandskennwert, nämlich die Temperatur der Bremsvorrichtung 16 nach dem Bremsvorgang, geht in diesem Fall nur implizit in die Berechnung ein bzw. ist die erforderliche Bremsenkühlzeit $T_B$ ein indirektes Maß für den Bremsenzustand, nämlich die Bremsentemperatur.

Überschreitet der Verschleißkennwert $V_K$ einen vorgegebenen Grenzwert, wird die Windenergieanlage 1 außer Betrieb gesetzt. Ist der Grenzwert noch eingehalten, wird im nächsten Schritt überprüft, ob der Verschleißkennwert $V_K$ einen Alarmwert überschritten hat. Ist dies der Fall, wird eine Warnmeldung abgegeben.

Im nächsten Schritt wird überprüft, ob die zwischen dem aktuellen Zeitpunkt $t_{akt}$ und dem Ende des Bremsvorgangs $t_E$ abgelaufene Zeit größer ist als die Bremsenkühlzeit $T_B$. Erst wenn dies der Fall ist kann der Normalbetrieb der Windenergieanlage fortgesetzt werden.

Bei der Ermittlung der Bremsenkühlzeit $T_B$ wird in einem Ausführungsbeispiel wie folgt vorgegangen: Beim Schließen der Bremsvorrichtung 16 werden die Startdrehzahl $n_S$ und die Startzeit $t_S$ gespeichert. Wenn die Bremse geöffnet wird oder wenn die Drehzahl auf weniger als 10 U/min abgesunken ist, wird die Endzeit $t_E$ gespeichert. Die Bremsenkühlzeit $T_B$ kann dann berechnet werden nach der Formel:

$$T_B = \frac{n_S * (t_E - t_A)}{2} * \frac{FixwertKühlzeit}{200}$$

Dabei ist die Startdrehzahl $n_S$ in der Einheit 1/s und die Zeit in s anzugeben. Das Ergebnis ist die Bremsenkühlzeit $T_B$ in Minuten. Der FixwertKühlzeit beträgt 60 min und ist wie die übrigen Konstanten empirisch ermittelt worden. Durch Anwendung der Formel gelangt man zu folgenden beispielhaften Werten für die Bremsenkühlzeit $T_B$.

| Startdrehzahl $n_S$ (U/min) | Bremszeit $(t_E - t_A)/_s$ | Kühlzeit $T_B$ (min) |
|---|---|---|
| 1750 | 14 | 61,3 |
| 1800 | 10 | 45,0 |
| 500 | 4 | 5,0 |
| 200 | 2 | 1,0 |
| 1000 | 5 | 12, 5 |
| 1200 | 50 | 150,0 |

Wenn die Anzahl der beim Bremsvorgang zurückgelegten Umdrehungen wesentlich größer ist als 200, ist die Bremse überhitzt worden.

**Patentansprüche**

1. Verfahren zum Ermitteln des Zustands einer Bremsvorrichtung (16) einer Windenergieanlage (1) mit den folgenden Schritten:

    a. Bereitstellen von Daten über das Belastungsverhalten von Bremsvorrichtungen (16) des betreffenden Typs;
    b. Aufnehmen eines Messwerts im Zeitraum zwischen dem Beginn eines Bremsvorgangs und dem Ende eines Bremsvorgangs;

c. Zusammenführen der Daten und des Messwerts zu einem Bremsenzustandskennwert, wobei der Bremsenzustandskennwert ein Maß für die Energieaufnahme der Bremsvorrichtung (16) beinhaltet.

2. Verfahren nach Anspruch 1, **dadurch gekennzeichnet, dass** der Messwert ein Maß für den Bremsweg umfasst.

3. Verfahren nach Anspruch 1 oder 2, **dadurch gekennzeichnet, dass** der Messwert ein Maß für die Differenz zwischen der Drehzahl am Beginn des Bremsvorgangs und der Drehzahl am Ende des Bremsvorgangs umfasst.

4. Verfahren nach einem der Ansprüche 1 bis 3, **dadurch gekennzeichnet, dass** der Messwert ein Maß für die Dauer des Bremsvorgangs umfasst.

5. Verfahren nach einem der Ansprüche 1 bis 4, **dadurch gekennzeichnet, dass** der Messwert mit einem Sensor (19) aufgenommen wird, der in der Windenergieanlage (1) unabhängig von einer Überwachung der Bremsvorrichtung (16) vorhanden ist.

6. Verfahren nach einem der Ansprüche 1 bis 5, **dadurch gekennzeichnet, dass** der Bremsenzustandskennwert nach Ende des Bremsvorgangs ermittelt wird.

7. Verfahren nach einem der Ansprüche 1 bis 6, **dadurch gekennzeichnet, dass** aus dem Bremsenzustandskennwert eine Bremsenkühlzeit ($T_B$) ermittelt wird.

8. Verfahren nach Anspruch, **dadurch gekennzeichnet, dass** aus dem Bremsenzustandskennwert ein Verschleißkennwert ($V_K$) ermittelt wird.

9. Windenergieanlage mit einer Bremsvorrichtung (16), mit einem Sensor (19) und mit einer Steuerungseinheit (20), die den Sensor (19) anweist, im Zeitraum zwischen dem Beginn eines Bremsvorgangs und dem Ende eines Bremsvorgangs einen Messwert aufzunehmen, **dadurch gekennzeichnet, dass** außerdem vorgesehen sind ein Datenspeicher (22), in dem Daten über das Belastungsverhalten von Bremsvorrichtungen (16) des betreffenden Typs gespeichert sind, und ein Rechenmodul (21), das aus den Daten und dem Messwert einen Bremsenzustandskennwert ermittelt, wobei der Bremsenzustandskennwert ein Maß für die Energieaufnahme der Bremsvorrichtung (16) beinhaltet.

10. Windenergieanlage nach Anspruch 9, **dadurch gekennzeichnet, dass** das Rechenmodul (21) dazu ausgebildet ist, aus dem Bremsenzustandskennwert eine Bremsenkühlzeit ($T_B$) zu berechnen.

11. Windenergieanlage nach Anspruch 9 oder 10, **dadurch gekennzeichnet, dass** das Rechenmodul (21) dazu ausgebildet ist, aus dem Bremsenzustandskennwert einen Verschleißkennwert ($V_K$) zu berechnen.

12. Windenergieanlage nach einem der Ansprüche 9 bis 11, **dadurch gekennzeichnet, dass** mit dem Sensor (19) aufgenommene Messwerte in der Steuerungseinheit (20) verarbeitet werden, um einen geeigneten Betriebspunkt der Windenergieanlage (1) zu ermitteln.

**Claims**

1. A method for determining the state of a braking apparatus (16) of a wind energy installation (1), having the following steps:

   a. provision of data relating to the load behavior of braking apparatuses (16) of the relevant type;
   b. recording a measured value in the time period between the start of a braking process and the end of a braking process;
   c. combination of the data and of the measured value to form a brake state characteristic value, wherein the brake state characteristic value includes a measure for the energy consumption of the braking apparatus (16).

2. The method as claimed in claim 1, wherein the measured value comprises a measure for the braking travel.

3. The method as claimed in claim 1 or 2, wherein the measured value comprises a measure for the difference between the rotation speed at the start of the braking process and the rotation speed at the end of the braking process.

**4.** The method as claimed in one of claims 1 to 3, wherein the measured value comprises a measure for the duration of the braking process.

**5.** The method as claimed in one of claims 1 to 4, wherein the measured value is recorded using a sensor (19) which is present in the wind energy installation (1) independently of monitoring of the braking apparatus (16).

**6.** The method as claimed in one of claims 1 to 5, wherein the brake state characteristic value is determined after the end of the braking process.

**7.** The method as claimed in one of claims 1 to 6, wherein a brake cooling time ($T_B$) is determined from the brake state characteristic value.

**8.** The method as claimed in claim , wherein a wear characteristic value ($V_K$) is determined from the brake state characteristic value.

**9.** A wind energy installation having a braking apparatus (16), having a sensor (19) and having a control unit (20) which instructs the sensor (19) to record a measured value in the time period between the start of a braking process and the end of a braking process, wherein a data memory (22) is also provided, in which data is stored relating to the load behavior of braking apparatuses (16) of the relevant type, and a computation module (21), which determines a brake state characteristic value from the data and the measured value, wherein the brake state characteristic value includes a measure for the energy consumption of the braking apparatus (16).

**10.** The wind energy installation as claimed in claim 9, wherein the computation module (21) is designed to calculate a brake cooling time ($T_B$) from the brake state characteristic value.

**11.** The wind energy installation as claimed in claim 9 or 10, wherein the computation module (21) is designed to calculate a wear characteristic value ($V_K$) from the brake state characteristic value.

**12.** The wind energy installation as claimed in one of claims 9 to 11, wherein measured values recorded using the sensor (19) are processed in the control unit (20) in order to determine a suitable operating point for the wind energy installation (1).

## Revendications

**1.** Procédé destiné à détecter l'état d'un dispositif de frein (16) d'une éolienne (1) comprenant les étapes suivantes :

a. fourniture de données sur le comportement en charge de dispositifs de frein (16) du type concerné ;
b. relevé d'une valeur de mesure pendant la période comprise entre le début d'une opération de freinage et la fin d'une opération de freinage ;
c. assemblage des données et de la valeur de mesure pour obtenir une valeur caractéristique de l'état du frein, la valeur caractéristique de l'état du frein contient une mesure pour la consommation d'énergie du dispositif de frein (16).

**2.** Procédé selon la revendication 1, **caractérisé en ce que** la valeur de mesure comprend une mesure pour la distance de freinage.

**3.** Procédé selon la revendication 1 ou 2, **caractérisé en ce que** la valeur de mesure comprend une mesure pour la différence entre la vitesse de rotation au début de l'opération de freinage et la vitesse de rotation à la fin de l'opération de freinage.

**4.** Procédé selon l'une des revendications 1 à 3, **caractérisé en ce que** la valeur de mesure comprend une mesure pour la durée de l'opération de freinage.

**5.** Procédé selon l'une des revendications 1 à 4, **caractérisé en ce que** la valeur de mesure est relevée avec un capteur (19) qui est présent dans l'éolienne (1) indépendamment d'une surveillance du dispositif de frein (16).

**6.** Procédé selon l'une des revendications 1 à 5, **caractérisé en ce que** la valeur caractéristique de l'état du frein est déterminée après la fin de l'opération de freinage.

7. Procédé selon l'une des revendications 1 à 6, **caractérisé en ce qu'**un temps de refroidissement du frein ($T_B$) est déterminé à partir de la valeur caractéristique de l'état du frein.

8. Procédé selon la revendication, **caractérisé en ce qu'**une valeur caractéristique d'usure ($V_K$) est déterminée à partir de la valeur caractéristique de l'état du frein.

9. Éolienne ayant un dispositif de frein (16), ayant un capteur (19) et ayant une unité de commande (20) qui ordonne au capteur (19) de relever une valeur de mesure pendant la période comprise entre le début d'une opération de freinage et la fin d'une opération de freinage, **caractérisée en ce qu'**il est également prévu un enregistreur de données (22) dans lequel sont stockées des données sur le comportement en charge de dispositifs de frein (16) du type concerné et un module de calcul (21) qui détermine une valeur caractéristique de l'état du frein à partir des données et de la valeur de mesure, la valeur caractéristique de l'état du frein contenant une mesure pour la consommation d'énergie du dispositif de frein (16).

10. Éolienne selon la revendication 9, **caractérisée en ce que** le module de calcul (21) est conçu pour calculer un temps de refroidissement du frein ($T_B$) à partir de la valeur caractéristique de l'état du frein.

11. Éolienne selon la revendication 9 ou 10, **caractérisée en ce que** le module de calcul (21) est conçu pour calculer une valeur caractéristique d'usure ($V_K$) à partir de la valeur caractéristique de l'état du frein.

12. Éolienne selon l'une des revendications 9 à 11, **caractérisée en ce que** des valeurs de mesure relevées avec le capteur (19) sont traitées dans l'unité de commande (20) pour déterminer un point de fonctionnement approprié de l'éolienne (1).

**Fig. 1**

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102004051054 A1